# EUROPEAN PATENT SPECIFICATION

(11) **EP 3 475 795 B1**
(45) Date of publication and mention of the grant of the patent: **08.09.2021**
(21) Application number: 16756792.4
(22) Date of filing: 23.06.2016
(51) Int. Cl.: G06F 3/039, B43L 9/02

(54) **APPARATUS AND PROCESS FOR DRAWING LINES**
VORRICHTUNG UND VERFAHREN ZUM ZEICHNEN VON LINIEN
APPAREIL ET PROCÉDÉ POUR DESSINER DES LIGNES

(43) Date of publication of application: 01.05.2019
(73) Proprietor: Kronos S.r.l., 24050 Palosco (BG) (IT)
(72) Inventor: LEPORATI, Roberto, I-24050 Palosco BG (IT); LEPORATI, Giovanni, I-24050 Palosco BG (IT); LEPORATI, Luca, I-24050 Palosco BG (IT); LEPORATI, Dolores, I-24050 Palosco BG (IT); LEPORATI, Stefano, I-24050 Palosco BG (IT); LEPORATI, Odilla, I-24050 Palosco BG (IT)
(74) Representative: Valentini, Giuliano
(86) International application number: PCT/IB2016/053736
(87) International publication number: WO 2017/221051

(56) References cited:
- WO-A1-2016/081083
- WO-A2-2015/086992
- US-A- 5 337 402
- US-A1- 2014 375 653
- Justin Buus: "Corel Painter 2016 - User Guide - "Copyright 2015"", , 31 December 2015 (2015-12-31), pages 1-717, XP055369874, Retrieved from the Internet: URL:http://painter.demiart.ru/books/Corel- Painter-2016.pdf [retrieved on 2017-05-05]

## Description

### Field of the Invention

The present invention relates to an apparatus and a process for drawing lines on a sensitive medium, such as for example the touchscreen of a programmable device.

### Prior Art

Devices equipped with "touch-sensitive display" (also known as "touchscreen" or "touch-screen"), for example devices such as smartphones, tablets, notebooks and the like, are becoming very common in the art. These devices can be programmed and are able to run programs (the so-called "apps") in order to perform several functions, among which reproducing lines and/or drawings taken from a library of images pre-loaded in a memory unit, or even freehand drawing and depicting lines by moving a finger, or a special pen, on the touchscreen.

These devices are certainly useful for making generic and/or technical drawings, but inevitably lead to neglect the use and knowledge of those drawing tools which have been widely used up to now, such as for example straightedges, set squares, compasses or the like. This happens especially among young people born and grown up during the so-called "digital age", in which programmed devices are widely used.

WO 2016/081083 A1 discloses a conductive stylus to draw lines on the touch screen of a computing device. The conductive stylus can be made in the form of a brush comprising a conductive handle connected to a removable ferrule made of a conductive elastomer. The ferrule has conductive filaments at one end. A conductive tip can be attached to the opposite side of the conductive handle.

WO 2015/086992 A2 discloses a device to manually draw lines on capacitive touch screens. The manual device is fitted with an electrically-conductive pad and capable of being fastened on the rear end of another writing instrument in order to form an ergonomic multifunctional assembly. The internal structure of the device is electrically connected with the conductive pad and with a grip surface of the external structure of the device.

The User Guide of the known product "Corel Painter 2016" suggests to accept user inputs provided by using a stylus or a pen based on the stylus of mouse input to produce realistic brushstrokes.

US5337402A discloses a graphic data processing apparatus using displayed graphics for application program selection. Signals inputted from a keyboard and a mouse as pointing device are supplied to a CPU which is the control center of the apparatus. The CPU is responsive to the input signals supplied thereto and performs operation for processing of data based on a main program stored in a main storage device. The CPU reads out a program corresponding to a specified command among an application program group stored in an external storage device, for example, a floppy disk, a solid-state memory device such as a ROM, a cassette tape etc., and stores the program in a specified area in the main storage device. When a signal for specifying a display area is supplied from the keyboard or the mouse, the CPU performs processing of data based on the stored application program and supplies data to a video RAM. The data supplied to the video RAM is displayed on a display and the display data processed by the CPU is stored in a data area of the main storage device.

US2014/375653A1 discloses system and methods to drawing shapes with minimal user interaction. A system has a computing device and/or a drawing server provided with processors which can be configured to implement the functionality described herein using computer executable instructions stored in a temporary and/or permanent non-transitory memory. The memory can be flash memory, a magnetic disk drive, an optical drive, a programmable read-only memory (PROM), a read-only memory (ROM), or any other memory or combination of memories.

### Summary of the Invention

It is an object of the present invention to provide an apparatus able to combine the potential of touchscreen devices with a traditional tool for drawing lines.

Another object of the present invention is to provide an apparatus allowing to especially use a compass for drawing both open and closed curved lines on the surface of a touchscreen.

A further object of the present invention is to provide an apparatus allowing to adapt also already existing compass models for drawing both open and closed curved lines on the surface of a touchscreen.

These objects are achieved thanks to an apparatus according to claim 1 and a process according to claim 12. Further characteristics of the apparatus of the present invention are disclosed in the dependent claims.

An apparatus for drawing lines on a sensitive support, comprising at least one tool for drawing lines and a programmable device equipped with a capacitive touchscreen constituting the sensitive medium, is proposed. According to the invention, the tool for drawing lines includes a compass comprising a first leg having a drawing means able to interact with the touchscreen of the programmable device and a second leg with a bearing head at the end thereof, the bearing head having at least one flat bearing surface coated with antislip material, such as a silicone rubber or the like, so as to guarantee the stability of the compass during the movement.

Therefore, the programmable device equipped with a touchscreen is used as a common sheet on which both open and closed curved lines can be drawn by means of a compass, that is to say a tool normally used in the technical drawing to draw curved lines on a paper material.

The drawing means of the first leg is preferably an accessory removable from the first leg. Thus, the compass can also be used with other drawing means having different shapes and sizes.

The compass preferably comprises a handle made of an electrically conductive material and arranged so as to be electrically connected with the drawing means. In other words, in order to act on the touchscreen, the continuity of the electrical conductivity between the handle and the drawing means must be guaranteed.

For example, the handle and the first leg having the drawing means installed thereon are made of an electrically conductive material, for example a conductive metal, and are connected to each other, not only mechanically but also electrically.

Preferably, the drawing means is provided with an end portion made of a material having low coefficient of friction and having at least one smooth surface adapted to slidably engage the surface of the sensitive medium. The end portion has to be made of a material able to facilitate the drawing means to slide on the touchscreen without causing the surface thereof to be scratched.

Preferably, the end portion of the drawing means is connected to a flexible element, for example a spring or the like, in order to guarantee the end portion to swing limitedly. In this way, the contact keeping between the end portion and the touchscreen surface is facilitated regardless of the opening of the compass.

Preferably, the bearing head is also an accessory that can be removed from the second leg. In this way, bearing heads having different shapes and sizes can be used. Moreover, also the existing compasses, often made of conductive metal, can be used with these accessories installed in place of needle points and lead holders or pencil holders.

Preferably, the bearing head of the second leg may comprise one or more alignment indicators, for example portions projecting along orthogonal directions.

Preferably, the bearing head is mechanically connected to the second leg by a ball joint. In this way, the contact between the bearing head and the touchscreen surface is stably kept regardless of the opening of the compass.

The programmable device of an apparatus according to the invention is preferably programmed for displaying on the touchscreen the lines drawn by the compass.

The programmable device preferably includes at least one memory unit for storing the lines drawn by the compass

The capacitive touchscreen of the programmable device is a type of screen very common in programmable devices currently available on the market. However, in some examples not covered by the claimed invention, the touchscreen may also use a different technology.

The use of an apparatus of the heretofore described type is particularly simple and, for example, envisages the steps of:
- running, on the programmable device provided with a capacitive touchscreen, a program allowing the programmable device to interact with the compass of the apparatus;
- manually gripping the handle of the compass;
- positioning the bearing head, placed at the end of the second leg of the compass, on the surface of the touchscreen, and
- pivoting the compass while the drawing means placed at the end of the first leg of the compass is kept in contact with the surface of the touchscreen.

As the compass draws, the drawn lines are preferably displayed on the touchscreen

Furthermore, the storage of the drawn lines in at least one memory unit of the programmable device can be provided.

### Brief description of the drawings

Further characteristics and advantages of the present invention will be more evident from the following specification of some embodiments depicted for illustrative purposes and without limitation, with particular reference to the accompanying schematic drawings, wherein:
- Figure 1 is an elevation view of a compass ready to be used in an apparatus according to the present invention;
- Figure 2 is an elevation view of the compass of Figure 1, without its accessories;
- Figure 3 is an elevation view of a drawing means whose components are separated from one another;
- Figure 4 is an elevation view of a bearing head whose components are separated from one another;
- Figures 4A, 4B and 4C are plan bottom views of the components depicted in Figure 4; and
- Figure 5 is a perspective view depicting an embodiment of an apparatus according to the present invention while in use.

### Methods for carrying out the invention

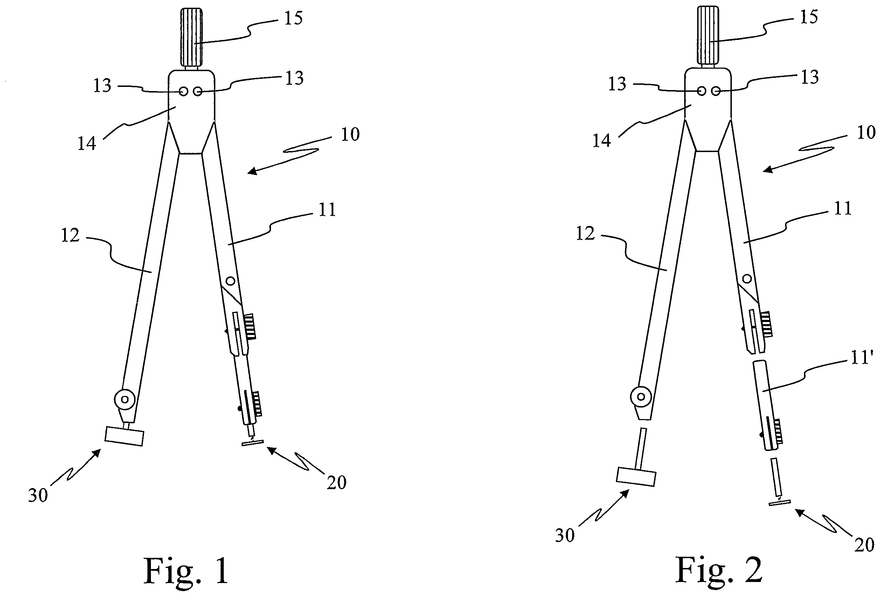

Figures 1 and 2 depict an embodiment of a compass 10 comprising a first leg 11 and a second leg 12 pivotable around respective pins 13 integral with the body 14 of the compass 10. A handle 15 is constrained to the upper part of the body 14. The legs 11 and 12, the pins 13, the body 14 and the handle 15 are made of an electrically conductive material, such as metal, and are electrically connected to one another.

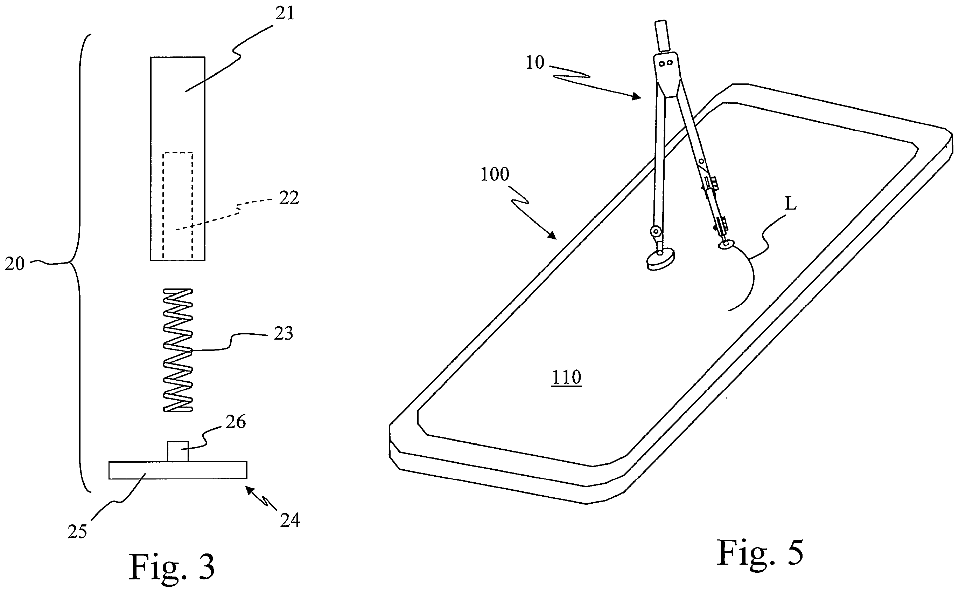

A drawing means 20 able to interact with the touchscreen 110 of a programmable device 100 (Figure 5) is installed on the first leg 11.

As shown in Figure 2, the drawing means 20 is an accessory removable from the first leg 11 and can be mounted on a removable portion 11' also made of an electrically conductive material, which is mounted on the leg 11. The drawing means 20 comprises a pin 21 (Figure 3) made of an electrically conductive material and electrically connected to the handle 15 by the leg 11, the removable portion 11', the pins 13 and the body 14 of the compass 10.

A bearing head 30 having at least one flat bearing surface coated with antislip material, is installed at the end of the second leg 12 of the compass 10 depicted in Figures 1 and 2. However, also the bearing head 30 is an accessory that can be removed from the second leg 12.

Figure 3 depicts an embodiment of a drawing means 20. The drawing means 20 comprises a pin 21 provided with a recess 22 in which a flexible element is inserted. In the embodiment depicted herein, the flexible element is a spring 23 also made of an electrically conductive material, which is held in position inside the recess 22, for example by a tight fit.

An end portion 24 of the drawing means 20 is made, for example, in the form of a circular plate, of a material having a low coefficient of friction, such as a plastic material still allowing the drawing means 20 to interact with the surface of a touchscreen, such as the touchscreen 110 of the programmable device 100 of Figure 5. The end portion 24 includes at least one smooth surface 25 adapted to slidably engage the surface of a touchscreen, or anyway of a sensitive medium. A pin 26 of the end portion 24 is inserted, in its turn, in the spring 23 by a tight fit.

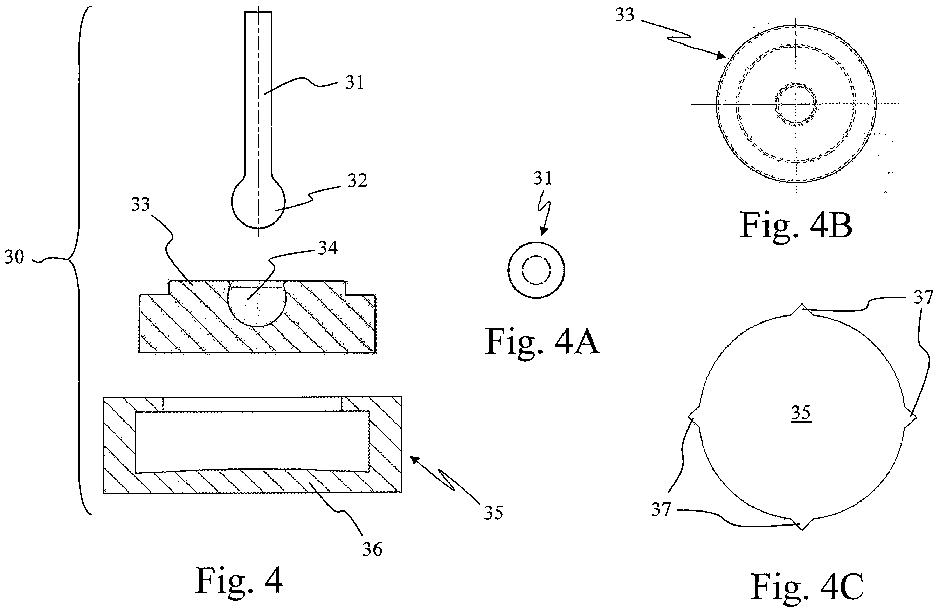

Figure 4 depicts the components of a bearing head 30 in a separate condition. The bearing head 30 comprises a pin 31 for the connection to the second leg 12 of the compass 10. The pin 31 is provided with a spherical end 32 to be engaged in a spherical seat 34 being in the body 33 of the bearing head 30. The pin 31 and the body 33 of the bearing head 30 are further depicted in bottom plan views in Figures 4A and 4B, respectively.

Thus the spherical end 32 of the pin 31, engaged in the spherical seat 34, make a ball joint to connect the bearing head 30 to the second leg 12.

The body 33 of the bearing head 30 is covered with a coating 35 made of antislip material, for example silicone rubber or the like. The coating 35 is provided with a flat bearing surface 36 allowing to stay stably in position on a touchscreen while the compass 10 is in use.

As depicted in the plan bottom view of Figure 4C, the coating 35 includes one or more alignment indicators which can be, for example, projecting edges 37 arranged along orthogonal directions.

The view of Figure 5 shows an apparatus according to an embodiment of the present invention, comprising in particular a compass 10 and a programmable device 100 equipped with a touchscreen 110 constituting the surface of a sensitive medium on which a curved line L, for example an arc of a circle or even a closed circle, can be drawn.

The programmable device 100 is programmed so that the lines drawn by the compass 10 are displayed on the capacitive touchscreen 110 and can include for example a memory unit for storing the lines drawn by the compass 10.

Several modifications can be made to the embodiments so far depicted for illustration purpose only. For example, the shape and the materials of the drawing means 20 and the bearing head 30 may also vary from those specifically described so far. Similarly, in some examples not covered by the claimed invention, the touchscreen types can also be based on other technologies, less common or not yet available on the market.

The scope of the invention is defined by the appended claims.

## Claims

1. An apparatus for drawing lines on a sensitive medium, comprising
at least one tool for drawing lines and
a programmable device (100) equipped with a capacitive touchscreen (110) constituting said sensitive medium,
the apparatus being **characterized in that**
said tool for drawing lines includes
a compass (10) comprising
a first leg (11) having a drawing means (20) which interacts with the capacitive touchscreen (110) of said programmable device (100), and
a second leg (12) with a bearing head (30) at the end thereof, the bearing head (30) having at least one flat bearing surface (36) coated with antislip material.

2. The apparatus according to claim 1, wherein the drawing means (20) of said first leg (11) is an accessory removable from said first leg (11).

3. The apparatus according to claim 1, wherein said compass (10) comprises a handle (15) made of an electrically conductive material, and wherein said handle (15) is electrically connected with said drawing means (20).

4. The apparatus according to claims 1 to 3, wherein said handle (15) and said leg, the latter having said drawing means (20) installed thereon, are made of an electrically conductive material and are electrically connected to each other.

5. The apparatus according to claim 1, wherein said drawing means (20) is provided with an end portion (24) made of a material having low coefficient of friction and having at least one smooth surface (25) adapted to slidably engage the surface of said capacitive touchscreen (110).

6. The apparatus according to claim 5, wherein the end portion (24) of said drawing means (20) is connected to a flexible element (23).

7. The apparatus according to claim 1, wherein said bearing head (30) is an accessory removable from said second leg (12).

8. The apparatus according to claim 1, wherein the bearing head (30) of said second leg (12) includes one or more alignment indicators (37).

9. The apparatus according to claim 1, wherein the bearing head (30) is mechanically connected to said second leg (12) by a ball joint (32, 34).

10. The apparatus according to claim 1, wherein said programmable device (100) is programmed for displaying on said touchscreen (110) the lines drawn by said compass (10).

11. The apparatus according to claim 1, wherein said programmable device (100) comprises at least one memory unit for storing the lines drawn by said compass (10).

12. A process for drawing lines on a capacitive touchscreen (110) of a programmable device (100) by means of a compass (10) comprising
a first leg (11) having a drawing means (20) which interacts with the capacitive touchscreen (110) of said programmable device (100), and
a second leg (12) with a bearing head (30) at the end thereof, the bearing head (30) having at least one flat bearing surface (36) coated with antislip material,
the process being **characterized by** the steps of
- running, on said programmable device (100) provided with a capacitive touchscreen (110), a program allowing the programmable device (100) to interact with the compass (10) of said apparatus;
- manually gripping the handle (15) of said compass (10);
- positioning the bearing head (30), placed at the end of the second leg (12) of said compass (10), on the surface of said capacitive touchscreen (110), and
- pivoting said compass (10) while the drawing means (20) placed at the end of the first leg (11) of said compass (10) is kept in contact with the surface of said touchscreen (110).

13. The process according to claim 12, wherein a step of displaying on said touchscreen (110) the lines drawn by said compass (10) is provided.

14. The process according to claim 12, wherein said programmable device (100) includes at least one memory unit and wherein a step of storing the lines drawn by said compass (10) is provided.

## Patentansprüche

1. Vorrichtung zum Zeichnen von Linien auf einem empfindlichen Medium, aufweisend mindestens ein Werkzeug zum Zeichnen von Linien und eine programmierbare Vorrichtung (100), die mit einem kapazitativen Touchscreen (110) ausgestattet ist, der das empfindliche Medium bildet, wobei die Vorrichtung **dadurch gekennzeichnet ist, dass** das Werkzeug zum Zeichnen von Linien einen Kompass (10) aufweist, aufweisend
ein erstes Bein (11) mit einem Zeichnungsmittel (20), das mit dem kapazitativen Touchscreen (110) der programmierbaren Vorrichtung (100) interagiert, und
ein zweites Bein (12) mit einem Lagerkopf (30) an dessen Ende, wobei der Lagerkopf (30) mindestens eine flache, mit rutschfestem Material beschichtete Lagerfläche (36) aufweist.

2. Vorrichtung nach Anspruch 1, wobei das Zeichnungsmittel (20) des ersten Beins (11) ein von dem ersten Bein (11) abnehmbares Zubehör ist.

3. Vorrichtung nach Anspruch 1, wobei der Kompass (10) einen Griff (15) aufweist, der aus einem elektrisch leitfähigen Material hergestellt ist, und wobei der Griff (15) elektrisch mit dem Zeichnungsmittel (20) verbunden ist.

4. Vorrichtung nach den Ansprüchen 1 bis 3, wobei der Griff (15) und das Bein, wobei letzteres das Zeichnungsmittel (20) daran installiert hat, aus einem elektrisch leitenden Material hergestellt und elektrisch miteinander verbunden sind.

5. Vorrichtung nach Anspruch 1, wobei das Zeichnungsmittel (20) mit einem Endabschnitt (24) versehen ist, der aus einem Material mit niedrigem Reibungskoeffizienten besteht und mindestens eine glatte Oberfläche (25) hat, die angepasst ist, gleitend mit der Oberfläche des kapazitativen Touchscreens (110) in Eingriff zu kommen.

6. Vorrichtung nach Anspruch 5, wobei der Endabschnitt (24) des Zeichnungsmittels (20) mit einem flexiblen Element (23) verbunden ist.

7. Vorrichtung nach Anspruch 1, wobei der Lagerkopf (30) ein von dem zweiten Bein (12) abnehmbares Zubehör ist.

8. Vorrichtung nach Anspruch 1, wobei der Lagerkopf (30) des zweiten Beins (12) einen oder mehrere Ausrichtungsindikatoren (37) aufweist.

9. Vorrichtung nach Anspruch 1, wobei der Lagerkopf (30) mit dem zweiten Bein (12) durch ein Kugelgelenk (32, 34) mechanisch verbunden ist.

10. Vorrichtung nach Anspruch 1, wobei die programmierbare Vorrichtung (100) zum Anzeigen der durch den Kompass (10) gezogenen Linien auf dem Touchscreen (110) programmiert ist.

11. Vorrichtung nach Anspruch 1, wobei die programmierbare Vorrichtung (100) mindestens eine Speichereinheit zum Speichern der von dem Kompass (10) gezogenen Linien aufweist.

12. Verfahren zum Zeichnen von Linien auf einem kapazitativen Touchscreen (110) einer programmierbaren Vorrichtung (100) mittels eines Kompasses (10), aufweisend
ein erstes Bein (11) mit einem Zeichnungsmittel (20), das mit dem kapazitativen Touchscreen (110) der programmierbaren Vorrichtung (100) interagiert, und
ein zweites Bein (12) mit einem Lagerkopf (30) an dessen Ende, wobei der Lagerkopf (30) mindestens eine flache, mit rutschfestem Material beschichtete Lagerfläche (36) aufweist,
wobei das Verfahren durch die Schritte gekennzeichnet ist:
- Ausführen eines Programms auf der programmierbaren Vorrichtung (100) mit einem kapazitativen Touchscreen (110), das es der programmierbaren Vorrichtung (100) ermöglicht, mit dem Kompass (10) der Vorrichtung zu interagieren;
- manuelles Ergreifen des Griffs (15) des Kompasses (10);
- Positionieren des Lagerkopfes (30), der am Ende des zweiten Beines (12) des Kompasses (10) platziert ist, auf der Oberfläche des kapazitativen Touchscreens (110), und
- Schwenken des Kompasses (10), während das am Ende des ersten Beines (11) des Kompasses (10) angeordnete Zeichenmittel (20) in Kontakt mit der Oberfläche des Touchscreens (110) gehalten wird.

13. Verfahren nach Anspruch 12, wobei ein Schritt des Anzeigens der durch den Kompass (10) gezogenen Linien auf dem Touchscreen (110) vorgesehen ist.

14. Verfahren nach Anspruch 12, wobei die programmierbare Vorrichtung (100) mindestens eine Speichereinheit aufweist und wobei ein Schritt des Speicherns der von dem Kompass (10) gezogenen Linien vorgesehen ist.

## Revendications

1. Appareil pour dessiner des lignes sur un support sensible, comprenant au moins
un outil pour dessiner des lignes et
un dispositif programmable (100) équipé d'un écran tactile capacitif (110) constituant ledit support sensible,
l'appareil étant **caractérisé en ce que** ledit outil pour dessiner des lignes comporte
un compas (10) comprenant
un premier pied (11) ayant
un moyen de dessin (20) qui interagit avec l'écran tactile capacitif (110) dudit dispositif programmable (100), et
un deuxième pied (12) avec une tête d'appui (30) à son extrémité, la tête d'appui (30) ayant au moins une surface d'appui plate (36) revêtue d'un matériau antidérapant.

2. Appareil selon la revendication 1, dans lequel le moyen de dessin (20) dudit premier pied (11) est un accessoire amovible dudit premier pied (11).

3. Appareil selon la revendication 1, dans lequel ledit compas (10) comprend une poignée (15) faite d'un matériau électriquement conducteur, et dans lequel ladite poignée (15) est reliée électriquement audit moyen de dessin (20).

4. Appareil selon les revendications 1 à 3, dans lequel ladite poignée (15) et ledit pied, cette dernière ayant ledit moyen de dessin (20) installé sur elle, sont faites d'un matériau électriquement conducteur et sont reliées électriquement l'une à l'autre.

5. Appareil selon la revendication 1, dans lequel ledit moyen de dessin (20) est pourvu d'une partie d'extrémité (24) faite d'un matériau ayant un faible coefficient de friction et ayant au moins une surface lisse (25) adaptée pour s'engager de manière coulissante sur la surface dudit écran tactile capacitif (110).

6. Appareil selon la revendication 5, dans lequel la partie d'extrémité (24) dudit moyen de dessin (20) est reliée à un élément flexible (23).

7. Appareil selon la revendication 1, dans lequel ladite tête d'appui (30) est un accessoire amovible dudit deuxième pied (12).

8. Appareil selon la revendication 1, dans lequel la tête d'appui (30) dudit deuxième pied (12) comprend un ou plusieurs indicateurs d'alignement (37).

9. Appareil selon la revendication 1, dans lequel la tête d'appui (30) est reliée mécaniquement audit deuxième pied (12) par une rotule (32, 34).

10. Appareil selon la revendication 1, dans lequel ledit dispositif programmable (100) est programmé pour afficher sur ledit écran tactile (110) les lignes dessinées par ledit compas (10).

11. Appareil selon la revendication 1, dans lequel ledit dispositif programmable (100) comprend au moins une unité de mémoire pour stocker les lignes dessinées par ledit compas (10).

12. Procédé pour dessiner des lignes sur un écran tactile capacitif (110) d'un dispositif programmable (100) au moyen d'un compas (10) comprenant
un premier pied (11) ayant un moyen de dessin (20) qui interagit avec l'écran tactile capacitif (110) dudit dispositif programmable (100), et
un deuxième pied (12) avec une tête d'appui (30) à son extrémité, la tête d'appui (30) ayant au moins une surface d'appui plate (36) revêtue d'un matériau antidérapant,
le procédé étant **caractérisé par** les étapes consistant à :
- exécuter, sur ledit dispositif programmable (100) muni d'un écran tactile capacitif (110), un programme permettant au dispositif programmable (100) d'interagir avec le compas (10) dudit appareil ;
- saisir manuellement la poignée (15) dudit compas (10) ;
- positionner la tête d'appui (30), placée à l'extrémité du deuxième pied (12) dudit compas (10), sur la surface dudit écran tactile capacitif (110), et
- faire pivoter ledit compas (10) tandis que le moyen de dessin (20) placé à l'extrémité du premier pied (11) dudit compas (10) est maintenu en contact avec la surface dudit écran tactile (110).

13. Procédé selon la revendication 12, dans lequel une étape consistant à afficher sur ledit écran tactile (110) des lignes dessinées par ledit compas (10) est prévue.

14. Procédé selon la revendication 12, dans lequel ledit dispositif programmable (100) comprend au moins une unité de mémoire et dans lequel une étape consistant à stocker des lignes dessinées par ledit compas (10) est prévue.
